# EUROPÄISCHE PATENTSCHRIFT

(11) **EP 0 854 980 B1**
(45) Veröffentlichungstag und Bekanntmachung des Hinweises auf die Patenterteilung: **23.06.1999**
(21) Anmeldenummer: 96924756.8
(22) Anmeldetag: 20.07.1996
(51) Int. Cl.: F02P 5/15

(54) **VERFAHREN UND ANORDNUNG ZUM REDUZIEREN VON LASTWECHSELSCHLÄGEN BEI EINEM KRAFTFAHRZEUG**
PROCESS AND DEVICE FOR REDUCING LOAD CHANGE STRESSES IN A MOTOR VEHICLE
PROCEDE ET DISPOSITIF POUR REDUIRE LES A-COUPS SOUS CHARGE ALTERNEE DANS UN VEHICULE AUTOMOBILE

(30) Priorität: 14.10.1995 DE 19538369
(43) Veröffentlichungstag der Anmeldung: 29.07.1998
(73) Patentinhaber: ROBERT BOSCH GMBH, 70442 Stuttgart (DE)
(72) Erfinder: STOSS, Peter, D-76694 Forst (DE); ZHANG, Hong, D-93057 Regensburg (DE)
(86) Internationale Anmeldenummer: DE9601332
(87) Internationale Veröffentlichungsnummer: WO9714886

(56) Entgegenhaltungen:
- EP-A- 0 655 554
- WO-A-93/13311
- DE-A- 4 021 440
- DE-A- 4 239 711

## Beschreibung

### Stand der Technik

Die vorliegende Erfindung betrifft ein Verfahren und eine Anordnung zum Reduzieren von Lastwechselschlägen bei einem Kraftfahrzeug, wobei eine Drehmomentenkorrektur der Brennkraftmaschine über eine Steuerung des Zündwinkels durchgeführt wird.

Wird ein mit einer Brennkraftmaschine betriebenes Fahrzeug durch schnelles Öffnen der Drosselklappe beschleunigt, kommt es oftmals zu einem, für die Insassen unkomfortablen, Lastwechselschlag und einem anschließenden Nachschwingen des Fahrzeugs. Um solche Fahrzeugschwingungen bei Beschleunigungen oder ruckelnde Bewegungen des Fahrzeugs bei stationärem Betrieb zu dämpfen, wird gemäß der DE 40 21 444 A1 eine Drehmomentenkorrektur des Motors über eine Steuerung des Zündwinkels durchgeführt. Dabei wird in Abhängigkeit der Änderung der Motordrehzahl ein Korrekturwert für den Zündwinkel ermittelt, so daß die daraus folgende Änderung des Drehmoments gegenphasig zu der Ruckelschwingung des Fahrzeugs ist.

Der Erfindung liegt die Aufgabe zugrunde, ein Verfahren bzw. eine Anordnung der eingangs genannten Art anzugeben, womit eine weitere Verbesserung der Dämpfung von Lastwechselschlägen möglich ist.

### Vorteile der Erfindung

Erfindungsgemäß wird diese Aufgabe durch die Merkmale der Anspüche 1 oder 7 gelöst. Danach wird zunächst das indizierte Basismoment des Motors bestimmt, welches dem an der Kurbelwelle des Motors abgreifbaren, nicht durch MotorVerlustmomente verringerten Kupplungsmoment entspricht. Dann wird das indizierte Basismoment durch Filterung in ein indiziertes Soll-Moment überführt, welches bei Lastwechsel einem gegenüber dem Basismoment geringeren Anstieg aufweist.Schließlich wird aus dem indizierten Soll-Moment ein dieses realisierender Soll-Zündwinkel abgeleitet. Der Soll-Zündwinkel wird deshalb aus einem indizierten Soll-Moment abgeleitet, weil ein Zündwinkeleingriff hauptsächlich das indizierte Motormoment beeinflußt und weniger die Motorverlustmomente. Ein so ermittelter Soll-Zündwinkel wirkt unmittelbarer und damit stärker dämpfend auf Lastwechselschläge ein.

Für die Filterung des indizierten Basismoments wird zweckmäßigerweise ein PT-Glied zweiter Ordnung verwendet, weil das daraus hervorgehende indizierte Soll-Moment eine optimale Dämpfung der Lastwechselschläge gewährleistet. Vorteilhafte Ausbildungen der Erfindung gehen aus den Unteransprüchen hervor.

### Beschreibung eines Ausführungsbeispiels

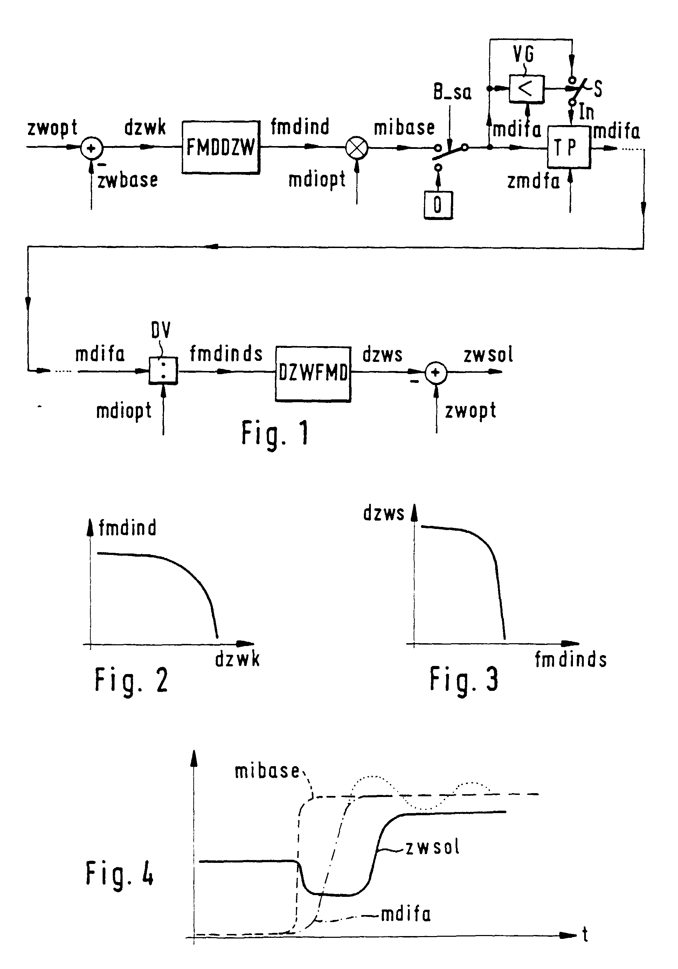

Anhand eines in der Zeichung dargestellten Ausführungsbeispiels wird nachfolgend die Erfindung näher erläutert. Es zeigen Figur 1 ein Blockschaltbild für die Ableitung eines Soll-Zündwinkels, Figur 2 eine Kennlinie welche die Abhängigkeit eines Drehmomenten-Korrekturfaktors von einer Zündwinkelverstellung wiedergibt, Figur 3 eine zu der in Figur 2 dargestellten Kennlinie inverse Kennlinie und Figur 4 Momenten- und Zündwinkelverläufe.

Wie dem Blockschaltbild in Figur 1 zu entnehmen ist, wird zunächst die Differenz zwischen einem optimalen Zündwinkel zwopt und dem aktuellen, durch keinen Eingriff veränderten Zündwinkel zwbase gebildet. Der optimale Zündwinkel zwopt wird einem nicht dargestellten last- und drehzahlabhängigen Kennfeld entnommen, wobei dieser optimale Zündwinkel dem optimalen Wirkungsgrad des Motors entspricht. Ebenso kann der aktuelle Zündwinkel zwbase aus einem last- und drehzahlabhängigen Kennfeld herausgelesen werden. Diese Zündwinkel-Differenz dzwk, die Ablage des aktuellen Zündwinkels zwbase gegenüber dem optimalen Zündwinkel zwopt, wird einem Schaltblock FMDDZW zugeführt. In diesem Schaltblock FMDDZW ist eine in Figur 2 dargestellte Korrekturkennlinie realisiert, welche die Abhängigkeit zwischen einem Korrekturfaktor fmdind für ein dem optimalen Wirkungsgrad des Motor entsprechendes optimales indiziertes Motormoment mdiopt und der Zündwinkel-Differenz dzwk wiedergibt. Zu der jeweiligen in den Schaltblock FMDDZW eingegebenen Zündwinkel-Differenz dzwk wird aus dieser Kennlinie der zugehörige Korrekturfaktor fmdind herausgelesen. Mit diesem Korrekturfaktor fmdind wird das optimale indizierte Motormoment mdiopt multipliziert, das ebenso wie der optimale Zündwinkel zwopt aus einem last- und drehzahlabhängigen Kennfeld herausgelesen werden kann. Das Ergebnis der Multiplikation des optimalen indizierten Motormoments mdiopt mit dem Korrekturfaktor fmdind ist das indizierte Basismoment mibase des Motors. Das indizierte Basismoment mibase ist also das aufgrund der Abweichung des aktuellen Zündwinkels zwbase vom optimalen Zündwinkel zwopt sich einstellende indizierte Motormoment. Wenn hier von einem indizierten Moment die Rede ist, ist damit das Motormoment gemeint, das direkt aus der Verbrennung entsteht und weder durch ein Schleppmoment oder weitere Verbrauchermomente reduziert ist. Das Schleppmoment des Motors ist ein durch die Massen der Antriebseinheit verbrauchtes Verlustmoment und kann aus einem Kennfeld, das von der Motordrehzahl und der Motortemperatur abhängt, ermittelt werden. Die Verbrauchermomente lassen sich aus einem Kennfeld in Abhängigkeit der Betriebszustände von Zusatzaggregaten, z. B. Klimaanlage, Lenkung, Getriebe etc., herauslesen. Das indizierte Motormoment ist somit die Summe aus dem an der Kurbelwelle auftretenden Kupplungsmoment, dem Schleppmoment und eventuell weiteren Verbrauchermomenten. Die zuvor beschriebene Ableitung des indizierten Basismoments mibase ist an sich aus DE 42 39 711 A1 bekannt und wird dort als Verbrennungsmoment bezeichnet.

Das indizierte Basismoment mibase wird auf ein Filter TP durchgeschaltet, sofern nicht eine Schubabschalt-Bedingung B_sa vorliegt. Das Filter TP ist vorzugsweise ein PT-Glied zweiter Ordnung. Aus der Filterung des indizierten Basismoments mibase geht ein indiziertes Soll-Moment mdifa hervor. In der Figur 4 sind die zeitlichen Verläufe des indizierten Basismoments mibase und des indizierten Soll-Moments mdifa dargestellt. Bei einem Lastwechsel steigt das indizierte Basismoment mibase sprungartig an. Durch das PT-Glied zweiter Ordnung erhält das indizierte Soll-Moment mdifa beim Lastwechsel zunächst einen allmählichen Anstieg und verläuft dann schnell gegen den dem Fahrerwunsch entsprechenden Wert des indizierten Motormoments. Die Übertragungsfunktion des Filters würde eigentlich zu den in der Figur 4 punktiert angedeuteten Über- und Unterschwingern des Verlauf des indizierten Soll-Moments mdifa führen.

Vornehmlich die Unterschwinger sind unerwünscht. Deshalb wird das Filter TP deaktiviert, sobald das indizierte Soll-Moment mdifa das indizierte Basismoment mibase übersteigt. Zu diesem Zweck besitzt das Filter TP einen Aktivierungseingang In. Als Aktivierungssignal dient das indizierte Basismoment mibase, das über einen Schalter S dem Aktivierungseingang In zugeführt wird, solange das am Ausgang des Filters TP erscheinende indizierte Soll-Moment mdifa noch kleiner ist als das indizierte Basismoment mibase. Den Vergleich zwischen dem indizierten Soll-Moment mdifa und dem indizierten Basismoment mibase führt eine Vergleichsschaltung VG durch. Sobald diese Vergleichsschaltung VG feststellt, daß das indizierte Soll-Moment mdifa das indizierte Basismoment mibase übersteigt, wird der Schalter S geöffnet. Dann liegt am Aktivierungseingang In kein Signal an und das Filter TP ist nicht mehr aktiv, so daß sein Ausgangssignal mdifa gleich dem indizierten Basismoment mibase ist.

Das Filter TP besitzt eine veränderbare Anstiegszeitkonstante zmdfa, um die Anstiegszeit des indizierten Soll-Moments mdifa in Abhängigkeit vom jeweils eingelegten Getriebegang einstellen zu können. Und zwar wird die Zeitkonstante zmdfa für die Filterung mit zunehmendem Gang kleiner, beispielsweise beträgt die Zeitkonstante zmdfa im Falle, daß der erste Gang eingelegt ist, 0,3 sec und beim größten eingelegten Gang 0,01 sec.

Aus dem, wie vorangehend beschrieben, ermittelten indizierten Soll-Moment mdifa wird nun auf folgende Weise ein dieses Moment realisierender Soll-Zündwinkel zwsol abgeleitet. In einem Dividierer DV wird das Verhältnis aus dem zuvor bestimmten indizierten Soll-Moment mdifa und dem optimalen indizierten Motormoment mdiopt gebildet. Der daraus hervorgehende Korrekturfaktor fmdinds wird einem Schaltblock DZWFMD zugeführt, in dem eine in Figur 3 dargestellte Kennlinie realisiert ist. Es handelt sich hierbei um eine Korrektur-Kennlinie, welche die Abhängigkeit einer Zündwinkeländerung dzws von dem Momenten-Korrekturfaktor fmdinds wiedergibt. Diese Korrekturkennlinie im Schaltblock DZWFMD ist invers zur der Korrektur-Kennlinie in Schaltblock FMDDZW. Der Schaltblock DZWFMD erzeugt also in Abhängigkeit von dem Momenten-Korrekturfaktor fmdinds ein Ausgangssignal dzws, das die Differenz zwischen den dem optimalen indizierten Motormoment mdiopt entsprechenden optimalen Zündwinkel zwopt und einem dem induzierten Soll-Moment mdifa entsprechenden Soll-Zündwinkel zwsol angibt. Der gewünschte optimale Zündwinkel zwopt resultiert schließlich aus der Differenzbildung zwischen dem optimalen Zündwinkel zwopt und der Zündwinkel-Differenz dzws. Dieser Soll-Zündwinkel zwsol bewirkt, daß sich das indizierte Soll-Moment mdifa einstellt, welches Lastwechselschläge weitgehend reduziert. In der Figur 4 ist beispielhaft ein zeitlicher Verlauf des Soll-Zündwinkels zwsol nach einem Lastwechsel dargestellt.

Anstelle oder zusätzlich zum Soll-Zündwinkel kann auch eine Soll-Anzahl von Zylinderausblendungen ermittelt weden, woraus das vorangehend beschriebene indizierte Soll-Moment resultiert.

## Patentansprüche

1. Verfahren zum Reduzieren von Lastwechselschlägen bei einem Kraftfahrzeug, indem eine Drehmomentenkorrektur der Brennkraftmaschine über eine Steuerung des Zündwinkels durchgeführt wird, dadurch gekennzeichnet,
- daß das indizierte Basismoment (mibase) des Motors, welches direkt aus der Verbrennung entsteht, bestimmt wird,
- daß das indizierte Basismoment (mibase) durch Filterung (TP) in ein indiziertes Soll-Moment (mdifa) überführt wird, welches bei einem Lastwechsel einen gegenüber dem indizierten Basismoment (mibase) geringeren Anstieg aufweist,
- und daß aus dem indizierten Soll-Moment (mdifa) ein Soll-Zündwinkel (zwsol) und/oder eine Soll-Anzahl von Zylinderausblendungen abgeleitet wird.

2. Verfahren nach Anspruch 1, dadurch gekennzeichnet,
- daß aus einem last- und drehzahlabhängigen Kennfeld ein dem optimalen Wirkungsgrad des Motors entsprechender optimaler Zündwinkel (zwopt) ermittelt wird,
- daß die Differenz (dzwk) zwischen dem optimalen Zündwinkel (zwopt) und dem aktuellen Zündwinkel (zwbase) gebildet wird,
- daß aus einer Korrektur-Kennlinie (FMDDZW), welche die Abhängigkeit zwischen einem Korrekturfaktor (fmdind) für ein dem optimalen Wirkungsgrad des Motors entsprechendes optimales indiziertes Motormoment (mdiopt) und der Zündwinkel-Differenz (dzwk) wiedergibt, ein der aktuellen Zündwinkel-Differenz zugeordneter Korrekturfaktor (fmdind) herausgelesen wird,
- und daß durch Multiplikation des optimalen indizierten Motormoments (mdiopt) mit dem Korrekturfaktor (fmdind) das indizierte Basismoment (mibase) ermittelt wird.

3. Verfahren nach Anspruch 1, dadurch gekennzeichnet, daß das indizierte Basismoment (mibase) zur genannten Filterung einem Tiefpaßfilter (TP) zugeführt wird.

4. Verfahren nach Anspruch 1 oder 3, dadurch gekennzeichnet, daß die Filterung (TP) des indizierten Basismoments (mibase) deaktiviert wird, sobald das indizierte Soll-Moment (mdifa) das indizierte Basismoment (mibase) übersteigt.

5. Verfahren nach Anspruch 1 oder 3, dadurch gekennzeichnet, daß das Filter (TP) eine veränderbare Anstiegszeitkonstante (zmdfa) hat, die in Abhängigkeit vom eingelegten Getriebegang eingestellt wird.

6. Verfahren nach Anspruch 1 und 2, dadurch gekennzeichnet,
- daß das Verhältnis aus dem indizierten Soll-Moment (mdifa) und dem optimalen indizierten Motormoment (miopt) gebildet wird,
- daß dieses Momenten-Verhältnis einen Korrekturfaktor (fmdinds) darstellt, für den aus einer zu der Korrektur-Kennlinie (FMDDZW) inversen Korrektur-Kennlinie (dzwfmd) die zugehörige Zündwinkel-Differenz (dzws) herausgelesen wird,
- und daß durch Subtraktion der Zündwinkel-Differenz (dzws) vom optimalen Zündwinkel (zwopt) der Soll-Zündwinkel (zwsol) bestimmt wird.

7. Anordnung zum Reduzieren von Lastwechselschlägen bei einem Kraftfahrzeug, welcher eine Drehmomentenkorrektur der Brennkraftmaschine über eine Steuerung des Zündwinkels durchführt, dadurch gekennzeichnet,
- daß Mittel (FMDDZW) vorhanden sind, welche das indizierte Basismoment (mibase) des Motors, das direkt aus der Verbrennung entsteht, bestimmen,
- daß ein Filter (TP) das indizierte Basismoment (mibase) in ein indiziertes Soll-Moment (mdifa) überführt, welches bei einem Lastwechsel einen gegenüber dem indizierten Basismoment (mibase) geringeren Anstieg aufweist,
- und daß weitere Mittel (DV, DZWFMD) vorhanden sind, die aus dem indizierten Soll-Moment (mdifa) einen Soll-Zündwinkel (zwsol) ableiten.

## Claims

1. Process for reducing load change stresses in a motor vehicle, in that a torque correction of the internal combustion engine is carried out by controlling the ignition angle, characterized
- in that the indexed base torque (mibase) of the engine, which is produced directly from the combustion, is determined,
- in that the indexed base torque (mibase) is converted, by filtering (TP), into an indexed setpoint torque (mdifa) which, in the case of a load change, has a lower rise than the indexed base torque (mibase),
- and in that a setpoint ignition angle (zwsol) and/or a setpoint number of cylinder shut-offs is derived from the indexed setpoint torque (mdifa).

2. Process according to Claim 1, characterized
- in that an optimum ignition angle (zwopt) which corresponds to the optimum efficiency of the engine is determined from a load-dependent and rotational-speed-dependent characteristic diagram,
- in that the difference (dzwk) between the optimum ignition angle (zwopt) and the current ignition angle (zwbase) is formed,
- in that a correction factor (fmdind) which is assigned to the current difference between the ignition angles is read out from a correction characteristic curve (FMDDZW) which represents the dependence between a correction factor (fmdind) for an optimum indexed engine torque (mdiopt), which corresponds to the optimum efficiency of the engine, and the difference between the ignition angles (dzwk),
- and in that the indexed base torque (mibase) is determined by multiplying the optimum indexed engine torque (mdiopt) by the correction factor (fmdind).

3. Process according to Claim 1, characterized in that the indexed base torque (mibase) is fed to a low-pass filter (TP) for the aforesaid filtering.

4. Process according to Claim 1 or 3, characterized in that the filtering (TP) of the indexed base torque (mibase) is deactivated as soon as the indexed setpoint torque (mdifa) exceeds the indexed base torque (mibase).

5. Process according to Claim 1 or 3, characterized in that the filter (TP) has a variable rise time constant (zmdfa) which is set as a function of the gear speed selected.

6. Process according to Claim 1 and 2, characterized
- in that the ratio of the indexed setpoint torque (mdifa) to the optimum indexed engine torque (miopt) is formed,
- in that this torque ratio constitutes a correction factor (fmdinds) for which the associated difference between the ignition angles (dzws) is read out of a correction characteristic curve (dzwfmd) which is inverse with result to the correction characteristic curve (FMDDZW),
- and in that the setpoint ignition angle (zwsol) is determined by subtracting the difference between the ignition angles (dzws) from the optimum ignition angle (zwopt).

7. Arrangement for reducing load change stresses in a motor vehicle, which carries out a torque correction of the internal combustion engine by controlling the ignition angle, characterized
- in that means (FMDDZW) are present which determine the indexed base torque (mibase) of the engine which arises directly from the combustion,
- in that a filter (TP) converts the indexed base torque (mibase) into an indexed setpoint torque (mdifa) which, in the case of a load change, has a lower rise than the indexed base torque (mibase),
- and in that further means (DV, DZWFMD) are present which derive a setpoint ignition angle (zwsol) from the indexed setpoint torque (mdifa).

## Revendications

1. Procédé pour réduire les à-coups d'alternance de charge d'un véhicule automobile selon lequel on corrige le couple du moteur en commandant l'angle d'allumage,
caractérisé en ce que
- on détermine le couple de base indexé (mibase) du moteur engendré directement par la combustion,
- on transfère le couple de base indexé (mibase) par filtrage (TP) en un couple de consigne indexé (mdifa) qui présente une montée plus faible que le couple de base indexé (mibase) pour une alternance de charge, et
- à partir du couple de consigne indexé (mdifa), on déduit un angle d'allumage de consigne (zwsol) et/ou un nombre de consignes de suppression de cylindre.

2. Procédé selon la revendication 1,
caractérisé en ce que
- à partir d'un champs de caractéristiques dépendant de la charge et de la vitesse de rotation, on détermine un angle d'allumage optimum (zwopt) correspondant au rendement optimum du moteur,
- on forme la différence (dzwk) entre l'angle d'allumage optimum (zwopt) et l'angle d'allumage actuel (zwbase) ,
- à partir d'une caractéristique de correction (FMDDZW) qui représente la relation entre un coefficient de correction (fmdind) d'un couple moteur indexé optimum (mdiopt) correspondant au rendement optimum du moteur et la différence de l'angle d'allumage (dzwk), on extrait un coefficient de correction (fmdind) associé à la différence actuelle de l'angle d'allumage et,
- par multiplication du couple moteur indexé optimum (midopt) avec le coefficient de correction (fmdind), on détermine le couple de base indexé (mibase).

3. Procédé selon la revendication 1,
caractérisé en ce qu'
on applique le couple de base indexé (mibase) à un filtre passe-bas (TP) pour assurer le filtrage.

4. Procédé selon les revendications 1 ou 3,
caractérisé en ce qu'
on désactive le filtre (TP) du couple de base indexé (mibase) dès que le couple de consigne indexé (mdifa) dépasse le couple de base indexé (mibase).

5. Procédé selon la revendication 1 ou 3,
caractérisé en ce que
le filtre (TP) a une constante de temps de montée (zmdfa) variable qui est réglée en fonction du rapport de vitesse utilisé.

6. Procédé selon les revendications 1 et 2,
caractérisé en ce qu'
- on forme de rapport du couple de consigne indexé (mdifa) et du couple moteur indexé optimum (miopt),
- ce rapport de découple correspond à un coefficient de correction (fmdinds) pour lequel, à partir d'une caractéristique de correction (dzwfmd) inverse de la caractéristique de correction (FMDDZW), on extrait la différence d'angle d'allumage correspondante (dzws),
- et par soustraction de la différence d'angle d'allumage (dzws) de l'angle d'allumage optimum (zwopt), on définit l'angle d'allumage de consigne (zwsol).

7. Dispositif pour réduire les à-coups d'alternance de charge d'un véhicule automobile selon lequel on effectue une correction de couple du moteur à combustion interne en commandant l'angle d'allumage,
caractérisé par
- des moyens (FMDDZW) qui définissent le couple de base indexé (mibase) du moteur engendré directement par la combustion,
- un filtre (TP) qui transfère le couple de base indexé (mibase) en un couple de consigne indexé (mdifa) qui présente pour une alternance de charge, une montée plus faible que celle du couple de base indexé (mibase) et,
- d'autres moyens (DV, DZWFMD) qui déduisent un angle d'allumage de consigne (zwsol) à partir du couple de consigne indexé (mdifa).
